(19) Europäisches Patentamt
European Patent Office
Office européen des brevets

(11) Veröffentlichungsnummer: 0 213 422
B1

(12) # EUROPÄISCHE PATENTSCHRIFT

(45) Veröffentlichungstag der Patentschrifft: 28.02.90

(51) Int. Cl. [5]: C 08 C 19/02, C 08 F 8/04, C 07 F 15/00

(21) Anmeldenummer: 86110742.3

(22) Anmeldetag: 04.08.86

(54) **Verfahren zur selektiven Hydrierung ungesättigter Verbindungen.**

(30) Priorität: 16.08.85 DE 3529252

(43) Veröffentlichungstag der Anmeldung: 11.03.87 Patentblatt 87/11

(45) Bekanntmachung des Hinweises auf die Patenterteilung: 28.02.90 Patentblatt 90/09

(84) Bennante Vertragsstaaten: DE FR GB IT

(56) Entgegenhaltungen:
EP-A-0 134 023
DE-A-3 337 294
US-A-3 700 637

**Die Akte enthält technische Angaben, die nach dem Eingang der Anmeldung eingereicht wurden und die nicht in dieser Patentschrift enthalten sind.**

(73) Patentinhaber: BAYER AG
D-5090 Leverkusen 1 Bayerwerk (DE)

(72) Erfinder: Fiedler, Paul, Dr.
Rybniker Strasse 8
D-5000 Koeln 80 (DE)
Erfinder: Buding, Hartmuth, Dr.
Liebermannstrasse 1
D-4047 Dormagen (DE)
Erfinder: Braden, Rudolf, Dr.
Nothäuser Feld 1
D-5068 Odenthal-Scheuren (DE)
Erfinder: Thörmer, Joachim, Dr.
Emil-Nolde Strasse 39
D-5090 Leverkusen (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 213 422 B1

LIBERGRAF, STOCKHOLM 1990

**Beschreibung**

Die Erfindung betrifft ein Verfahren zur selektiven Hydrierung ungesättigter, gegebenenfalls hochmolekularer Verbindungen, die stickstoffhaltige, reduzierbare Gruppen tragen.

Es ist bekannt, daß man CC-Doppelbindungen selektiv neben stickstoffhaltigen, reduzierbaren Gruppen an festen Katalysatoren hydrieren kann. Dazu verwendet man Palladium- oder Platin-Katalysatoren. Es werden dabei Ausbeuten bis zu 90 % erreicht (Houben-Weyl, Methoden der Organischen Chemie, Band IV, 1c, Reduktion I (1980), Seite 168). Die Selektivität ist jedoch häufig unbefriedigend. So erhält man bei Verwendung von Platinoxid zur Hydrierung von 1-Cyanocyclohexen nur 31 % des gewünschten Cyanocyclohexans (s.M. Freifelder, Practical Catalytic Hydrogenation, (1971), Seite 157).

Es ist weiterhin bekannt, ungesättigte Nitrile unter Verwendung von Rhodiumkomplexen als homogene Katalysatoren (Wilkinson-Komplexe) zu hydrieren. Die Cyanogruppe wird da bei nicht hydriert. Infolge Ligandenaustausch kann mit Nitrilen aber eine Entaktivierung des Katalysators erfolgen (s. Houben-Weyl, a.a.O., Seiten 57 bis 60).

Da Rhodiumkomplexe der Formel $(C_6H_5)_3P_3Rh^IX$ auch für die Hydrierung von Nitrilen geeignet sind (DE-AS-1 793 616, Spalte 2, Zeile 51) muß man erwarten, daß die Selektivität für die Hydrierung von olefinischen Doppelbindungen neben Nitrilgruppen nicht immer ausreicht.

Aus der US-PS-3 454 644 ist bekannt, daß man mit phosphanhaltigen Komplexen des Typs $L_nMX_2$ (L = CO oder tertiäres Phosphin, n = 3 oder 4, M = Ruthenium oder Osmium, X = Halogen und/oder Wasserstoff) Keto-, Formyl-, Nitril-, nichtaromatische -C=C- und -C≡C- Gruppen hydrieren kann, wobei stets sämtliche vorhandene Gruppen dieser Art hydriert werden.

Hydridocarboxylato-tris-triphenylphosphanruthenium-Komplexe zeigen katalytische Aktivität für die Hydrierung von 1-Olefinen (J. Chem. Soc. (A) 1969, S. 2610 - 2615). Substituierte und innenständige Olefine werden jedoch nicht hydriert. Dieser Umstand wird auf die sterische Hinderung durch die Triphenylphosphan-Liganden zurückgeführt, die einen Hydrid-Transfer verhindern.

Kationische Rutheniumkomplexe, die als homogene Katalysatoren für die Hydrierung von Olefinen in saurer, methanolischer Lösung geeignet sind, werden in J.C.S. Dalton 1973, S. 846 - 854, beschrieben. Auch mit diesen Komplexen erfolgt keine Hydrierung von innenständigen Doppelbindungen.

Ebenso kann $RuH(CF_3CO_2)(PPH_3)_3$ (Ph = Phenyl) als Katalysator für die partielle Hydrierung von konjugierten Dienen eingesetzt werden (Litvin, E.F.; Freidlin, L.Kh. und Karinov, K.G.; in Neftkhimiya 12 (1972) 3, 318 - 323).

Besonders problematisch ist die selektive Hydrierung von polymeren, ungesättigten Verbindungen, die stickstoffhaltige, reduzierbare Gruppen tragen, da hier die Abtrennung von Nebenprodukten nicht oder zumindest nur mit extrem hohem Aufwand möglich ist.

Es ist aus US-PS-3 700 637 bekannt, die CC-Doppelbindungen von Dien-(Meth)-acrylnitrilcopolymeren mit großem Anteil an alternierenden Dien-Nitril-Einheiten homogen mit Rhodiumhalogenkomplexkatalysatoren in Chlorbenzol zu hydrieren. Die Eignung anderer Metalle wie Platin, Ruthenium, Iridium, Palladium, Rhenium, Kobalt oder Kupfer, homogen oder heterogen, wird angedeutet.

In der DE-OS-2 539 132 wird eine lösungsmittelabhängige selektive Hydrierung von Butadien-Acrylnitrilcopolymeren mit dem vorbekannten Rhodiumkatalysator postuliert, bei der die CN-Dreifach- und cis-Doppelbindungen erhalten bleiben und die vinylischen und trans-Doppelbindungen quantitativ hydriert werden, wenn Chlorbenzol als Lösungsmittel verwendet wird. In anderen Lösungsmitteln, insbesondere Ketonen, werden nur niedrige Hydriergrade erzielt.

Aus der DE-OS-2 459 115 schließlich ist es bekannt, ungesättigte Polyhydroxykohlenwasserstoffe mit Molgewichten bis zu 4000 unter Erhalt der Hydroxylgruppen mit Hilfe von Rutheniumkatalysatoren homogen oder vorzugsweise heterogen zu hydrieren. Als Lösungsmittel für die heterogene Hydrierung kommen aliphatische Kohlenwasserstoffe, aromatische Kohlenwasserstoffe, Alkohole, Ether, Ester und Wasser in Frage; für die homogene Hydrierung werden keine Angaben gemacht. Die Polymeren sollen auch z. B. Acrylnitril als Comonomer enthalten können, detaillierte Beschreibungen werden nicht gemacht, jedoch ist zu berücksichtigen, daß aus US-PS-3 454 644, Beispiel IX, bekannt ist, daß die Nitrilgruppe von Benzonitril in homogener Ru-Katalyse in Ethanol zur Aminogruppe hydriert wird.

Da die Rhodiumvorkommen sehr klein und Rhodium nicht nur in der chemischen Industrie, sondern überwiegend in der Elektro-, Glas- und Keramikindustrie und in jüngster Zeit ganz besonders in der Automobilindustrie (Abgaskatalysatoren) eingesetzt wird, ist eine Verknappung dieses Edelmetalls in Zukunft nicht auszuschließen.

Ziel der vorliegenden Erfindung war es, ein neues rhodiumunabhängiges, homogenes Hydrierverfahren zur selektiven Hydrierung von ungesättigten Verbindungen, die stickstoffhaltige, reduzierbare Gruppen tragen, bereitzustellen, das es erlaubt, auch polymere, ungesättigte Verbindungen, die stickstoffhaltige reduzierbare Gruppen tragen, unter Erhalt der stickstoffhaltigen, reduzierbaren Gruppen zu hydrieren.

Die Aufgabe wurde überraschenderweise durch homogene Reaktionsführung unter Verwendung von Rutheniumcarboxylato-Komplexen gelöst.

Gegenstand der Erfindung ist daher die Hydrierung ungesättigter Verbindungen, die stickstoffhaltige, reduzierbare Gruppen tragen, in homogener Phase, unter Erhalt der stickstoffhaltigen, reduzierbaren Gruppen, dadurch gekennzeichnet,

daß als Katalysator eine Verbindung der Formel

$RuH_m(R_1CO_2)_n(L)_p$

verwendet wird, wobei

| | |
|---|---|
| $R_1$ | Alkyl, Aryl, Cycloalkyl, Aralkyl, das gegebenenfalls substituiert sein kann, |
| L | ein Phosphan oder Arsan, |
| m | 0 oder 1, |
| n | 1 oder 2 und |
| p | 2 oder 3 bedeuten. |

Alkylreste sind beispielsweise geradkettige oder verzweigte, gesättigte Kohlenwasserstoffreste mit 1 bis 20, bevorzugt 1 bis 12, besonders bevorzugt 1 bis 6 C-Atomen.

Cycloalkylreste sind beispielsweise cyclische, gesättigte Kohlenwasserstoffreste mit 5 bis 7 C-Atomen.

Arylreste sind beispielsweise aromatische Kohlenwasserstoffreste aus der Benzolreihe mit 6 bis 18, bevorzugt 6 bis 10 C-Atomen.

Aralkylreste sind beispielsweise durch Aryl substituierte Alkylreste, die im aliphatischen Teil aus einem geradkettigen oder verzweigten Kohlenwasserstoffrest mit 1 bis 6 C-Atomen und im aromatischen Teil aus einem Rest der Benzolreihe, vorzugsweise Phenyl, bestehen.

Die vorstehend erläuterten Alkyl-, Cycloalkyl-, Aryl- und Aralkylreste können gegebenenfalls durch Hydroxy, $C_1$- bis $C_6$-Alkoxy, $C_1$-$C_6$-Carbalkoxy, Fluor, Chlor oder Di-$C_1$-$C_4$-alkylamino substituiert sein, die Cycloalkyl-, Aryl- und Aralkylreste darüber hinaus durch $C_1$-$C_6$-Alkyl. Alkyl-, Cycloalkyl- und Aralkylgruppen können Ketogruppen enthalten.

Beispiele für den Rest $R_1$ sind Methyl, Ethyl, Propyl, iso-Propyl, tert.-Butyl, Cyclohexyl, Phenyl, Benzyl und Trifluormethyl.

Bevorzugte Reste $R_1$ sind Methyl, Ethyl und tert.-Butyl.

Beispiele für L sind solche, die den Formeln

$$\underset{\displaystyle R_3}{R_2\text{–}\overset{}{\underset{|}{P}}\text{–}R_4} \quad \text{und} \quad \underset{\displaystyle R_3}{R_2\text{–}\underset{|}{As}\text{–}R_4}$$

entsprechen, in denen $R_2$, $R_3$ und $R_4$ gleich oder verschieden sein können und der Definition von $R_1$ entsprechen.

Bevorzugte Liganden L sind
Triphenylphosphan,
Diethylphenylphosphan,
Tritolylphosphan,
Trinaphthylphosphan,
Diphenylmethylphosphan,
Diphenylbutylphosphan,
Tris-(p-carbmethoxyphenyl)-phosphan,
Tris-(p-cyano-phenyl)-phosphan,
Tributylphospan,
Tris-(trimethoxy-phenyl)-phosphane,
Bis-(trimethylphenyl)-phenylphosphane,
Bis-(trimethoxyphenyl)-phenylphosphane,
Trimethylphenyl-diphenylphosphane,
Trimethoxyphenyl-diphenyl-phosphane,
Bis-(dimethylphenyl)-phenylphosphane,
Tris-(dimethoxy-phenyl)-phosphane,
Bis-(dimethoxyphenyl)-phenylphosphane,
Dimethylphenyldiphenylphosphane,
Dimethoxyphenyldiphenylphosphane,
Triphenylarsan,
Ditolylphenylarsan,
Tris-(4-ethoxyphenyl)-arsan,
Diphenylcyclohexylarsan,
Dibutylphenylarsan und
Diethylphenylarsan.

Bevorzugt sind Triarylphosphane, insbesondere Triphenylphosphan.

Die verwenden Komplexe sind zum Teil bekannt. Sie können zum Beispiel sowohl direkt aus hydratisiertem Rutheniumtrichlorid in Gegenwart eines Überschußes des Liganden L und des Natriumsalzes der entsprechenden Carbonsäure als auch aus dem entsprechenden Komplex $RuCl_2L_3$ mit dem Natriumsalz einer Carbonsäure hergestellt werden (R.W. Mitchell, A. Spencer und G. Wilkinson in J.C.S. Dalton 1973, S. 852). Weitere Herstellungsvorschriften finden sich bei D. Rose, J.D Gilbert, R.P. Richardson und G. Wilkinson in J. Chem. Soc. (A) 1969, S. 2914, 2915 und A. Dobson, S.D. Robinson und M.F. Uttley in J.C.S. Dalton 1975, S. 376.

Als ungesättigte Verbindungen, die stickstoffhaltige, reduzierbare Gruppen tragen, kommen z. B. Nitrile, Imine und Oxime in Betracht, wobei Nitrile bevorzugt sind.

Hochmolekulare, ungesättigte Verbindungen, die stickstoffhaltige, reduzierbare Gruppen tragen, sind vorzugsweise nitrilgruppenhaltige Copolymere aus 85 bis 50 Gew.-%, bevorzugt 82 bis 55 Gew.-% zumindest einem konjugierten Diens, 15 bis 50 Gew.-%, vorzugsweise 18 bis 45 Gew.-%, zumindest einem ungesättigten Nitril und 0 bis 10 Gew.-%, bevorzugt 0 bis 8 Gew.-% zumindest weiteren mit konjugierten Dienen und ungesättigten Nitrilen copolymerisierbaren Monomeren.

Als konjugierte Diene kommen z. B. Butadien-1,3, 2-Methylbutadien-1,3, 2,3-Dimethylbutadien-1,3 und Pentadien-1,3: als ungesättigte Nitrile Acrylnitril und Methacrylnitril in Frage.

Als weitere Monomere kommen Vinylaromaten wie Styrol, o-, m- oder p-Methylstyrol, Ethylstyrol, Vinylnaphthalin und Vinylpyridin, α,β-ungesättigte Monocarbonsäuren mit 3 bis 5 C-Atomen wie Acrylsäure, Methacrylsäure und Crotonsäure sowie α,β-ungesättigte Dicarbonsäuren mit 4 bis 5 C-Atomen wie Malein-, Fumar-, Citracon- und Itakonsäure, ferner Vinylchlorid, Vinylidenchlorid, N-Methylolacrylamid und Vinylalkylether mit 1 bis 4 C-Atomen im Alkylteil in Betracht.

Vorzugsweise wird ein binäres Copolymer aus Butadien und Acrylnitril hydriert.

Das Molekulargewicht der Polymeren ist nicht kritisch und liegt zwischen 500 und 500 000 g/mol, bevorzugt zwischen 1000 und 200 000 g/mol und insbesondere zwischen 30 000 und

150 000 g/mol (Zahlenmittel, ermittelt durch Gelpermeationschromatographie).

Die Umsätze bzw. die Hydriergrade (Prozentsatz der hydrierten CC-Doppelbindungen bezogen auf die Gesamtzahl der ursprünglich im Polymer vorhandenen CC-Doppelbindungen) können bis 100 % betragen. Die Hydrierung kann jedoch erforderlichenfalls vorher abgebrochen werden. Bevorzugt werden Polymerisate mit Hydriergraden von über 80 %, insbesondere von über 90 %, vorzugsweise von über 95 % und ganz besonders bevorzugt von über 99 % nach dem erfindungsmäßen Verfahren erhalten.

Die Hydrierung kann in Substanz, insbesondere bei niedermolekularen, flüssigen Verbindungen, oder in Lösung durchgeführt werden.

Als Lösungsmittel für die Hydrierung kommen insbesondere niedermolekulare Ketone mit 3 bis 10 C-Atomen, wie Aceton, Butanon, Pentanone, Cyclopentanon, Cyclohexanon und Acetophenon in Frage.

Die Konzentration der ungesättigten Verbindung, bezogen auf die gesamte homogene Phase, beträgt wenigstens 1, vorzugsweise 5 bis 40 Gew.-%.

Die Konzentration an Katalysator, bezogen auf ungesättigte Verbindung (berechnet als Ruthenium), beträgt 10 bis 1000, vorzugsweise 40 bis 600 ppm.

Die Hydrierung wird zweckmäßigerweise bei 80 bis 200°C, vorzugsweise bei 100 bis 180°C, insbesondere bei 115 bis 160°C, und 1 bis 350 bar, vorzugsweise bei 20 bis 250 bar Wasserstoffdruck durchgeführt.

Der Katalysator kann nach der Reaktion durch übliche Methoden abgetrennt und das Produkt z. B. durch Destillation oder Kristallisation gereinigt werden.

Im Falle einer hochmolekularen Verbindung wird das Polymer mit Hilfe üblicher Methoden aus der Lösung abgetrennt, z. B. durch Eindampfen, durch Einblasen von Wasserdampf oder durch Zugabe eines Nichtlösungsmittels. Zur Entfernung von Restlösungsmittel oder Wasser schließt sich eine Trocknung an.

Hydriert man Dien-(Meth)acrylnitrilcopolymere nach dem Stand der Technik in Chlorbenzol mit Rhodiumkomplexkatalysatoren und arbeitet man die Reaktionslösungen zur Gewinnung der festen Polymere durch Einblasen von Wasserdampf auf, so scheiden sich an Wandung und Rührer des Strippers dicke Polymerfladen ab, was ein periodisches Öffnen des Strippers zur mechanischen Reinigung erfordert. Weiterhin verkleben die ausgetragenen feuchten Polymerkrümel das Wasserabtropfsieb innerhalb kurzer Zeit, so daß eine ständige Reinigung des Siebes durchgeführt werden muß.

Es wurde nun überraschend gefunden, daß sich die nach dem erfindungsgemäßen Verfahren enthaltenen Polymerlösungen durch Einblasen von Wasserdampf zur Gewinnung des festen Polymeren problemlos ohne Verkleben der Stripperwand, des -rührers und des -abtropfsiebes aufarbeiten lassen und daß auch nach Beendigung der Aufarbeitung eine mechanische Reinigung des Strippers nicht erforderlich ist.

Die erfindungsgemäß hydrierten Polymere werden in üblicher Weise durch eine Peroxid- oder Schwefelvulkanisation gehärtet, sofern die Vulkanisation nicht durch eine Strahlenvernetzung durchgeführt wird.

Aufgrund ihrer ausgezeichneten Wetter, Ozon-, Öl- und Heißluftbeständigkeit, sowie Beständigkeit gegenüber kaltem Klima können diese Polymere für hochwertige Gummiartikel, wie Dichtungen, Schläuche, Membranen, für Kabelisolationen und -mäntel eingesetzt werden.

Die erfindungsgemäß hydrierten, niedermolekularen Verbindungen, die stickstoffhaltige, reduzierbare Gruppen tragen, sind wertvolle Zwischenprodukte zur Herstellung von Wirkstoffen.

**Beispiel 1**

Eine sorgfältig entgaste Lösung von 160 g eines statistischen Butadien-Acrylnitrilcopolymeren mit 34,9 Gew.-% Acrylnitril und einer Mooney-Viskosität ML 1 + 4 (100°C) von 29 und 350 mg $RuH(CH_3CO_2)(PPh_3)_3$ in 1,6 kg Butanon, wurde in einem mit Stickstoff inertisierten 3 l-Autoklaven vorgelegt. Man heizte auf 145°C auf und hydrierte 4 h bei 140 bar Wasserstoffdruck. Der Hydriergrad des Polymeren wurde mittels IR-Spektroskopie zu 99 % ermittelt.

**Beispiel 2 - 6**

Nach der gleichen Vorschrift wie in Beispiel 1 wurden Hydrierungen mit jeweils 200 ppm Ruthenium in Form verschiedener Komplexe durchgeführt. Die Ergebnisse zeigt Tabelle 1.

**Tabelle 1**

| Katalysator | $RuH(RCO_2)(PPh_3)_3$ | | | | 200 ppm |
|---|---|---|---|---|---|
| Bsp. No. | 2 | 3 | 4 | 5 | 6 |
| R: | $CH_3CH_2$ | $(CH_3)_3C$ | $C_6H_5$ | $C_6H_5CH_2$ | $CF_3$ |
| Hydriergrad | 99,7 | 99,6 | 98,1 | 99,0 | 97,8 |

**Beispiel 7**

22 g Cyclohexennitril in 150 ml Aceton wurden in Gegenwart von 62 mg $RuH(CH_3CO_2)(PPh_3)_3$ 4 h bei 125°C und 100 bar Wasserstoffdruck hydriert.

Der Umsatz betrug 100 %. Amine konnten nicht nachgewiesen werden.

**Beispiel 8**

47 g Cyclohexencarbaldoxim in 120 ml 3-Methyl-2-pentanon wurden in Gegenwart von 100 mg $RuH(CH_3)_2CHCO_2(PPh_3)_3$ 3 h bei 125°C und 120 bar Wasserstoffdruck hydriert.

Der Umsatz betrug 77 %. Es konnten keine

Hydrierungsprodukte der Oximgruppe nachgewiesen werden.

**Beispiel 9**

Beispiel 1 wurde mit 300 ppm Ru als $Ru(CH_3CO_2)_2(PPh_3)_2$ wiederholt. Nach drei Stunden betrug der Hydriergrad (IR-spektroskopisch) mehr als 99 %.

**Patentansprüche**

1. Verfahren zur selektiven Hydrierung ungesättigter Verbindungen, die stickstoffhaltige, reduzierbare Gruppen tragen, in homogener Phase unter Erhalt der stickstoffhaltigen, reduzierbaren Gruppen, dadurch gekennzeichnet, daß als Katalysator eine Verbindung der Formel

$RuH_m(R_1CO_2)_n(L)_p$

verwendet wird, wobei

$R_1$ Alkyl, Aryl, Cycloalkyl oder Aralkyl, das gegebenenfalls substituiert sein kann,
L ein Phosphan oder Arsan,
m 0 oder 1,
n 1 oder 2 und
p 2 oder 3 bedeuten.

2. Verfahren nach Anspruch 1, dadurch gekennzeichnet, daß man als ungesättigte Verbindung, die stickstoffhaltige, reduzierbare Gruppen trägt, ein nitrilgruppenhaltiges Copolymer aus 85 - 50 Gew.-%, bevorzugt 82 bis 55 Gew.-%, zumindest einem konjugierten Dien, 15 bis 50 Gew.-%, vorzugsweise 18 bis 45 Gew.-%, zumindest einem ungesättigten Nitril und 0 bis 10 Gew.-%, bevorzugt 0 bis 8 Gew.-%, zumindest einem weiteren mit konjugierten Dienen und ungesättigten Nitrilen copolymerisierbaren Monomeren verwendet.

3. Verfahren nach Anspruch 1, dadurch gekennzeichnet, daß man als Lösungsmittel ein niedermolekulares Keton mit 3 bis 10 C-Atomen verwendet.

4. Verfahren nach Anspruch 1, dadurch gekennzeichnet, daß als Liganden L Triarylphosphane eingesetzt werden.

5. Verfahren nach Anspruch 1, dadurch gekennzeichnet, daß als Liganden L Triphenylphosphan verwendet wird.

6. Verfahren nach Anspruch 1, dadurch gekennzeichnet, daß $R_1$ Methyl, Ethyl oder tert.-Butyl bedeutet.

7. Verfahren nach Anspruch 1, dadurch gekennzeichnet, daß man bei 80 bis 200°C, bevorzugt 100 bis 180°C und insbesondere bei 115 bis 160°C hydriert.

8. Verfahren nach Anspruch 1, dadurch gekennzeichnet, daß man bei 1 bis 350 bar, bevorzugt bei 20 bis 250 bar Wasserstoffdruck hydriert.

**Claims**

1. A process for the selective hydrogenation of unsaturated compounds bearing nitrogen-containing reducible groups in homogeneous phase, the nitrogen-containing reducible groups remaining intact, characterized in that a compound corresponding to the following formula

$RuH_m(R_1CO_2)_n(L)_p$

in which

$R_1$ represents alkyl, aryl, cycloalkyl or aralkyl which may optionally be substituted,
L is a phosphane or arsane,
m is 0 or 1,
n is 1 or 2 and
p is 2 or 3,
is used as catalyst.

2. A process as claimed in claim 1, characterized in that a nitrile-group-containing copolymer of 85 to 50 % by weight and preferably 82 to 55 % by weight of at least one conjugated diene, 15 to 50 % by weight and preferably 18 to 45 % by weight of at least one unsaturated nitrile and 0 to 10 % by weight and preferably 0 to 8 % by weight of at least one other monomer copolymerizable with conjugated dienes and unsaturated nitriles is used as the unsaturated compound bearing nitrogen-containing reducible groups.

3. A process as claimed in claim 1, characterized in that a low molecular weight ketone containing 3 to 10 C atoms is used as solvent.

4. A process as claimed in claim 1, characterized in that triarylphosphanes are used as the ligand L.

5. A process as claimed in claim 1, characterized in that triphenylphosphane is used as the ligand L.

6. A process as claimed in claim 1, characterized in that $R_1$ is methyl, ethyl or tert.-butyl.

7. A process as claimed in claim 1, characterized in that the hydrogenation is carried out at 80 to 200°C, preferably at 100 to 180°C and more preferably at 115 to 160°C.

8. A process as claimed in claim 1, characterized in that the hydrogenation is carried out under a hydrogen pressure of 1 to 350 bar and preferably under a hydrogen pressure of 20 to 250 bar.

**Revendications**

1. Procédé d'hydrogénation de composés insaturés qui portent des groupes réductibles azotés, en phase homogène avec conservation des groupes réductibles azotés, caractérisé en ce que l'on utilise comme catalyseur un composé de formule

$RuH_m(R_1CO_2)_n(L)_p$

dans laquelle

| | |
|---|---|
| $R_1$ | représente un groupe alkyle, aryle, cycloalkyle ou arylalkyle qui peut éventuellement être substitué, |
| L | représente une phosphine ou une arsine, |
| m | est égal à 0 ou 1 |
| n | est égal à 1 ou 2 et |
| p | est égal à 2 ou 3 |

2. Procédé selon la revendication 1, caractérisé en ce que l'on utilise comme composé insaturé qui porte des groupes réductibles azotés un copolymère à groupes nitriles de 85 à 50 % en poids, de préférence 82 à 55 % en poids, d'au moins un diène conjugué, 15 à 50 % en poids, de préférence 18 à 45 % en poids, d'un nitrile insaturé et 0 à 10 % en poids, de préférence 0 à 8 % en poids, d'au moins un autre monomère copolymérisable avec les diènes conjugués et les nitriles insaturés.

3. Procédé selon la revendication 1, caractérisé en ce que l'on utilise comme solvant une cétone de bas poids moléculaire en $C_3$-$C_{10}$.

4. Procédé selon la revendication 1, caractérisé en ce que l'on utilise comme ligands L des triarylphosphines.

5. Procédé selon la revendication 1, caractérisé en ce que l'on utilise comme ligand L la triphénylphosphine.

6. Procédé selon la revendication 1, caractérisé en ce que $R_1$ représente un reste méthyle, éthyle ou tert.-butyle.

7. Procédé selon la revendication 1, caractérisé en ce que l'on effectue l'hydrogénation à 80 - 200°C, de préférence 100 - 180°C, et en particulier à 115 - 160°C.

8. Procédé selon la revendication 1, caractérisé en ce que l'on effectue l'hydrogénation sous une pression d'hydrogène de 1 à 350 bar, de préférence de 20 à 250 bar.